# EUROPEAN PATENT SPECIFICATION

(11) **EP 3 012 606 B1**
(45) Date of publication and mention of the grant of the patent: **31.05.2017**
(21) Application number: 15200116.0
(22) Date of filing: 11.12.2013
(51) Int. Cl.: G01K 1/14

(54) **MODULAR CONNECTING PIECE**
MODULARES VERBINDUNGSSTÜCK
PIÈCE DE RACCORDEMENT MODULAIRE

(43) Date of publication of application: 27.04.2016
(62) Divisional of application: 13196644.2
(73) Proprietor: ENDRESS + HAUSER WETZER GmbH + Co. KG, 87484 Nesselwang (DE)
(72) Inventor: Casirati, Paolo, 24047 Treviglio (IT)
(74) Representative: Andres, Angelika Maria

(56) References cited:
- WO-A1-2015/036625
- DE-A1- 3 447 830
- DE-C1- 10 106 475
- US-A- 4 747 883

## Description

The present invention concerns a modular connecting piece for connecting a terminal head to a protecting tube. Further on the present invention concerns a measuring insert and an arrangement comprising such a modular connecting piece and such a measuring insert as well as a kit of parts comprising those elements.

Gauges are already known in the state of the art. For example the European Patent Application EP 356593 A1 discloses a thermocouple temperature monitor for use in a high temperature reactor. There, the thermocouple wires are enclosed in a gas-tight metal protection sheath which is inserted inside a multi-segment refractory thermal well. An annular space formed between the sheath and the thermal well is continuously purged with a small quantity of a gas. Hence gasification products residing from the process are neutralized within the annular space by reaction with the purging gas.

Also the US Patent Application Publication US 3923552 discloses a thermocouple assembly that has an outer sheath positioned about a thermocouple probe. The outer sheath includes a casing and a tube joined at one end about a washer to form a hermetic seal at room temperature capable of withstanding atmospheric pressure. The casing, tube and washer each have different coefficients of expansion to form a hermetic seal when the outer sheath is heated capable of withstanding pressures in excess of 1,000 psi. The thermocouple probe has a plurality of thermocouple elements hermetically sealed in an inner sheath. The thermocouple elements are mutually aligned and spaced a predetermined distance from each other at the measuring junction. A hermetic seal is provided at the union of the outer sheath and the thermocouple assembly.

Also a similar thermometric device has become known from the website from http://claustemp.com/00-htp01.pdf. There, an arrangement is disclosed having a terminal head in which a terminal block is located. Terminal block and terminal head serve for connecting the thermocouple wires to a conduit to convey he measurement signal.

The thermocouples are connected to this terminal block and guided into a protective tube, i.e. a thermowell.
All in all, the thermocouple is arranged inside a process containment pressure body. This body has an inlet for receiving a purge gas into a hollow chamber of the body in which the thermocouple as well as a ceramic support insulator is arranged. The ceramic support insulator has a bore through which the purge gas can travel from an upper end to a lower end and finally travel in between the ceramic support insulator and the thermowell through a vent.
An example of a thermocouple probe including a thermowell and a passageway for a purge gas can be found in DE 3447 830 A1.
However all these installations have in common that the thermocouple and the measuring insert respectively are not replaceable, i.e. not replaceable directly in the field (without having to shut down the process).
Hence it is an object of the present invention to improve the existing gauges present in today's process plants.
The problem is solved by a measuring insert as in claim 1. Preferred embodiments of the invention are as claimed in the dependent claims.
The measuring insert, especially for measuring temperature, has a core part, in which core part bores for receiving electric conductors, either thermoelements e.g. of a thermocouple or connection wires of a RTD, are provided, which bores extend from the top to the bottom of the core part, wherein at the bottom there is at least one opening allowing for a purging gas to flow through the bores and the opening. According to the invention the core part is at least partially arranged in an external sheath in such a manner that the purging fluid is able to flow from the bottom of the core part and the outside of the core part to an exit chamber of the measuring insert. According to the invention the exit chamber contains a hollow space inside the measuring tube which communicates with the outside of the measuring insert by openings in the first sheath.
In an embodiment of the measuring insert the measuring insert has at least one measuring point arranged at one end of the core part, which core part is arranged in a first sheath, wherein the first sheath is partially arranged in a second sheath, wherein the second sheath is connected to the electrical connection of the insert, especially in the form of a terminal block, of the measuring insert and wherein openings via which the exit chamber communicates with the outside of the measuring insert is provided in the second sheath. It is possible to apply this concept to multipoint devices, i.e. devices with more than one measuring point at different heights along the insert length and devices that have different measuring points between the terminal block or insert electrical connection and the insert tip, respectively.
The invention is described in greater detail in the figures following:
Fig. 1: shows a cross section of the whole thermometric assembly and a possible path for the purging gas,
Fig. 2: shows a cross section of the connecting piece, i.e. neck, and
Fig. 3a, 3b: shows a perspective and a cross section view of an Insert respectively, and
Fig. 4a, 4b: shows a perspective view and a cross section view of a thermowell respectively.

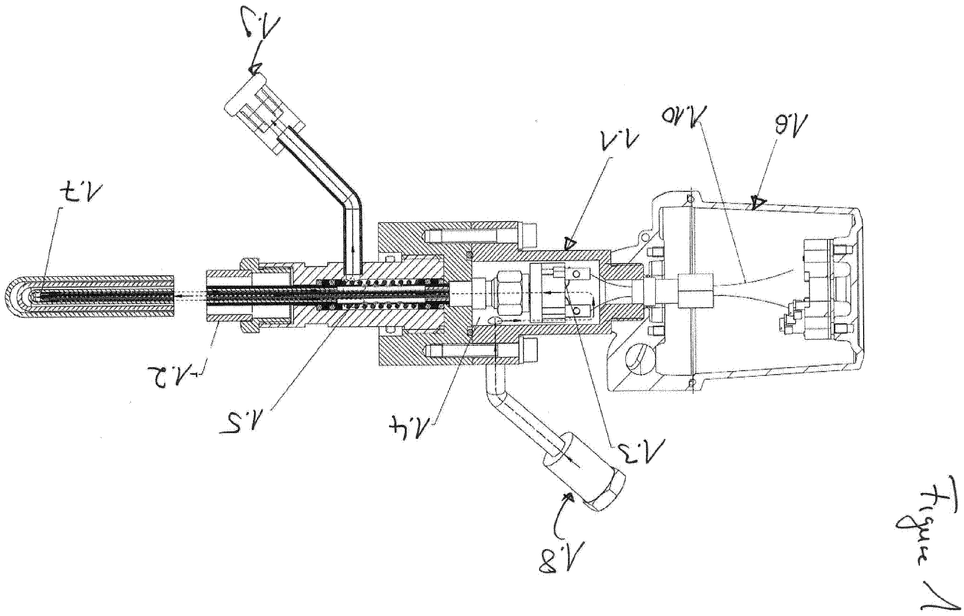

Figure 1 shows a gauge as it may be used in a process plant. In order to have an efficient purging action on the temperature sensing element, the inner volume of the whole device is divided into two chambers: the inlet one 1.4, 2.12 and the outlet chamber 1.5, 2.13. The link between the inlet and the outlet and hence between the first chamber and the second chamber is the sensing element itself 1.3. The purging gas moves inside the sub-assembly made of the neck 1.1 and the sensor 1.3. In figure 1 the inlet is identified by reference sign 1.8 wherein the outlet is identified by reference sign 1.9.

Also the way the purging gas or fluid is flowing through the modular connecting part (2.2, 2.3, 2.4) and the measuring insert 3, and the protective tube is depicted by the arrows present in figure 1.

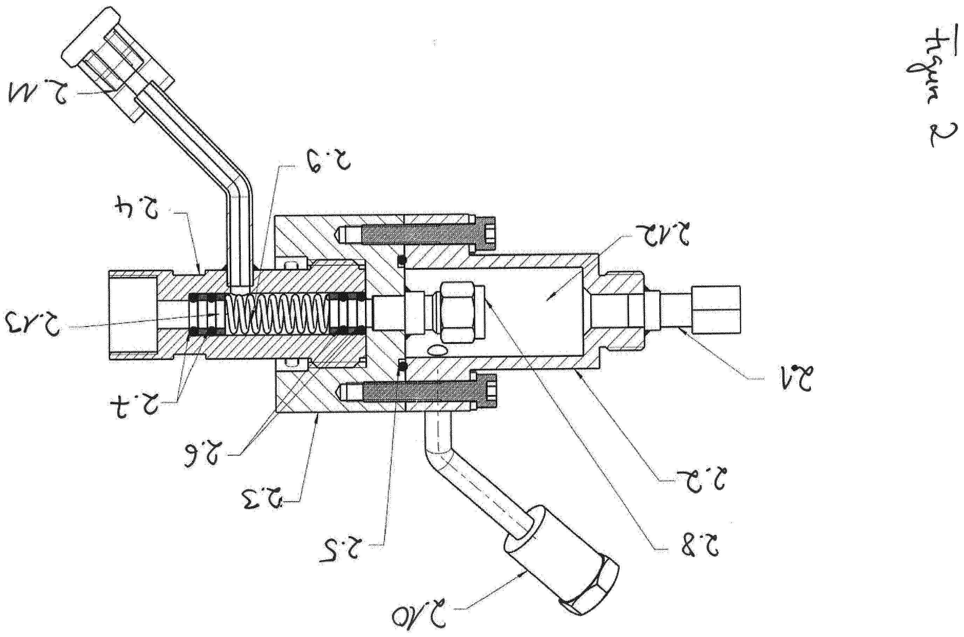

In figure 2 there is a detailed view of the neck: the inlet chamber 2.12 is delimited by a cap 2.2, a body 2.3, an inlet 2.10, a gasket 2.5 and a multiway barrier 2.1; the outlet chamber is obtained by the combination of the body 2.3, the sleeve 2.4, the outlet 2.11 and the outlet gaskets 2.6 and 2.7. Hence the modular connecting piece comprises or essentially consists of a first or upper mounting part, i.e. the cap 2.2., and a second or lower mounting part, i.e. body 2.3 and sleeve 2.3.

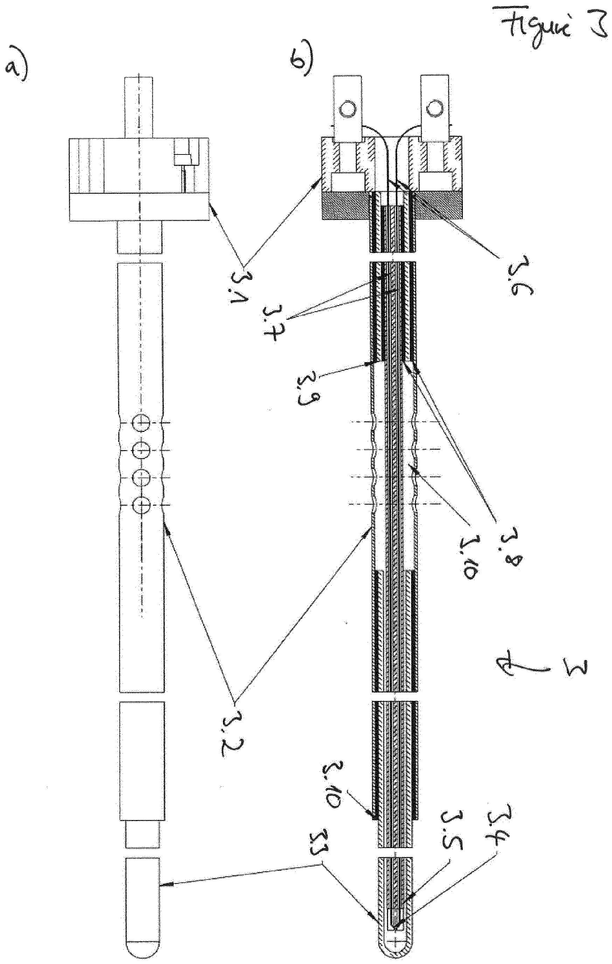

The cap 2.2 is engaged on the body 2.3 with some bolts 2.13 and between them the gasket 2.5 is compressed: this is a barrier that keeps the purging gas from coming out of the thermometer. The second barrier of the inlet chamber 1.4, 2.12 is the multiway barrier 2.1: this part can be a compression fitting that seals the extension cables 1.10 of the thermocouple. The third barrier is the compression fitting 2.8 that is engaged on the drilled tube 3.2 of the insert 1.3 and it is welded on the body 2.3: the compression fitting prevents the purging gas to come into the outlet chamber 1.5, 2.13 by passing the insert 1.3. Instead of the bolts 2.13 any other suitable means for connecting the cap 2.2. to the body 2.3 can be used.
The insert 1.3 is made of thermocouple wires 3.6, a ceramic insulator 3.5, a terminal block 3.1, a drilled tube 3.2 and an external ceramic sheath 3.3 as depicted e.g. in figure 3. Instead of thermocouple wires any other connecting wires can be used to connect e.g. a temperature resistance so called RTD or any other type of sensor element.

The first mounting part comprises at least the cap 2.2 wherein the second mounting part comprises either the body 2.3 and/or the sleeve 2.4. Hence the second mounting part itself can be modular. However it can also be construed that the first mounting part comprises the cap 2.2 and the body 2.3 wherein the second mounting part comprises only the sleeve 2.4.

When the purging gas is pushed into the inlet chamber 1.4, 2.12, the only way to come into the outlet chamber 1.5, 2.13 is to pass through the bores 3.7 of the insert 1.3: the thermocouples' wires 3.6 are put into these bores 3.7 and they are connected to a terminal block 3.1 at the cold end and they are welded or connected together at the hot junction 3.4, the zone of the insert 1.3 in contact with the process temperature.

The terminal block 3.1 is connected to the drilled tube 3.2 and the ceramic insulator 3.5 is supported by the drilled tube 3.2 by means of a ceramic spacer 3.9 glued or cemented by a gluing compound 3.8 to the drilled tube 3.2 and to insulator 3.5. The gluing compound 3.8 and 3.10 must be impermeable to gases.

Because of the aforementioned barriers, the gas is pushed through the bores 3.7 of the insert 1.3 and comes out at the hot junction 3.4. Then, the purging gas passes between the ceramic insulator 3.5 and the external sheath 3.3 and enters the exit chamber 3.10: the sheath 3.3 is supported by the drilled tube 3.2 with the use of the aforementioned gluing compound 3.10. Between the ceramic sheath 3.3 and the ceramic insulator 3.5 there mustn't be any gluing compound, otherwise the gas would not flow from the inlet chamber 1.4, 2.12 to the outlet chamber 1.5, 2.13.

When the gas enters the exit chambers, it cannot go to the terminal block because of the barrier made by the ceramic insulator 3.5, the spacer 3.9, the drilled tube 3.2 and the gluing compound 3.8: the gas is forced to exit the insert 1.3 passing through the holes of the drilled tube 3.2 towards the outlet chamber 1.5, 2.13.

When the purging gas enters the outlet chamber 1.5, 2.13, it is forced to follow the path towards the outlet 1.9. The gaskets 2.6 are deformed and pressed by the elastic element 2.9 between the walls of the sleeve 2.4, the face of the body 2.3 and the drilled tube 3.2 of the insert 1.3. The gaskets 2.6 do not allow the purging gas to go out from the inner volume of the thermometer to the external environment: they can be replaced by a gasket seated between the body 2.3 and the sleeve 2.4. In this case the second or lower mounting part is also modular and comprises as mentioned above a body and a sleeve part which can be mechanically connected, e.g. via a thread. However the second or lower mounting part can be also be monolithic, i.e. the body and the sleeve can be one part.

The outlet gaskets 2.7 are deformed by the elastic element 2.9 between the drilled tube 3.2 of the insert 1.3 and the walls of the sleeve 2.4: they are intended to prevent the purging gas entering the thermowell 1.5 and, accidentally, coming into the process causing pollution. The drilled tube 3.2 must be long enough to come in contact with the outlet gaskets 2.7: this tube 3.2 is e.g. made of a metal alloy and it is safer to put the gaskets 2.6 and 2.7 in contact with it instead of the insert ceramic sheath 3.3, because of the strength of the metal materials and the stricter tolerance that can be achieved machining metal parts instead of ceramic components.

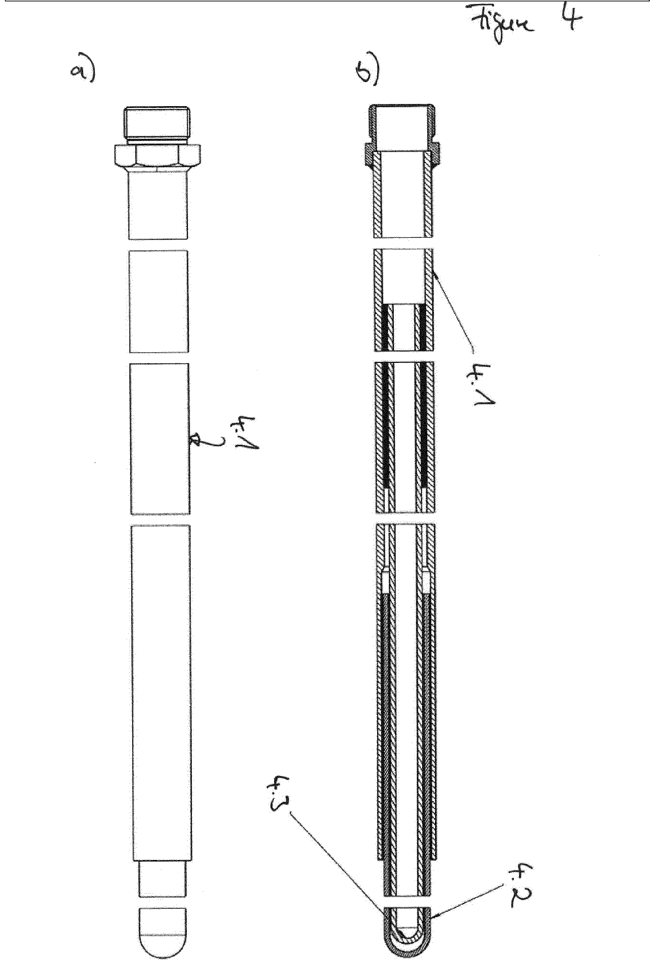

The elastic element 2.9 in figure 2 is a body with a proper length, material and/or stiffness and it must cause a deformation of the gaskets 2.6 and 2.7 in order to assure the gas tightness of the outlet chamber 1.5, 2.13 towards the process and the external environment: it loads the gaskets 2.6 and 2.7 enough to assure a gas tightness without damaging them. This system does not require high gas pressure or flow speed to work properly.
The thermowell 1.2 as shown in figure 4 is the protective sheath placed between the insert 1.3 and the process fluid: it must avoid the direct contact between the process fluid and the insert itself 3.1 and it can be made of metal materials and/or ceramic materials. If the thermowell is undamaged, it is possible to replace a not working insert 1.3 without shutting down the plant: after disassembling the head 1.6 and opening the multiway barrier 2.1 to release the extension cables 1.10, the bolts 2.13 of the neck 1.1 must be unscrewed and the cap 2.2 removed. The compression fitting 2.8 must be loosened and the insert 1.3 can be replaced with a new one. The new insert must be put into the compression fitting and, with this action, the barriers due to the gaskets 2.6 and 2.7 are recovered: the elasticity of the gaskets 2.6 and 2.7 allows the insert 1.3 to slide and so it possible to extract the old insert and to put in a new one. The whole assembly can be assembled following the aforementioned procedure in reverse order, substituting the gaskets with new ones if required.

When the facility is up and running, some process elements can pollute the insert 1.3 of the thermometer: if the thermowell 1.2 has one or more cracks or if it is made of ceramic materials that can be porous at high temperature, the harmful elements can pass through the external sheaths and enter the insert sheath 3.3. If the purging gas flows, the harmful elements are taken away and they come out from the outlet.

As mentioned before, this device can be used when the insert 1.3 is made of materials that cannot work at high temperature with the presence of Oxygen (e.g.: Tungsten-Rhenium thermocouples): in this case, the purging gas brings the Oxygen molecules away from the hot zone and avoid the chemical reaction to occur, protecting the sensor and making its life longer. Without the action of the purging gas, the oxidization of the thermocouple would be very fast (within minutes).

## Claims

1. Measuring insert (3) especially for measuring temperature, wherein the measuring insert (3) has a core part (3.5), in which core part (3.5) bores (3.7) for receiving electric conductors, e.g. thermoelements of a thermocouple or connection wires of a RTD, are provided,
which bores (3.7) extend from the top to the bottom of the core part,
wherein at the bottom there is at least one opening allowing for a purging gas to flow through the bores (3.7) and the opening,
wherein the core part (3.5) is at least partially arranged in an external sheath (3.3) in such a manner that the purging fluid is able to flow from the bottom of the core part (3.5) and the outside of the core part (3.5) to an exit chamber (3.10) of the measuring insert (3), **characterized in that**
the exit chamber (3.10) of the measuring insert is a hollow space inside the measuring insert (3) which communicates with the outside of the measuring insert (3) by openings in a drilled tube (3.2) supporting the external sheath (3.3).

2. Measuring insert according to claim 1,
wherein the measuring insert (3) has at least one measuring point (3.4) arranged at one end of the core part (3.5), which core part (3.5) is arranged in the external sheath (3.3),
wherein the external sheath (3.3) is partially arranged in the drilled tube (3.2),
wherein the drilled tube (3.2) is connected to a terminal block (3.1) of the measuring insert (3) and
wherein openings via which the exit chamber (3.10) of the measuring insert communicates with the outside of the measuring insert (3) is provided in the drilled tube (3.2).

3. Arrangement comprising a measuring insert (3) according to one of the preceding claims, a protective tube (4.1), a modular connecting piece (2.2, 2.3, 2.4) and a terminal head (1.6).

## Patentansprüche

1. Messeinsatz (3), insbesondere zur Messung der Temperatur, wobei der Messeinsatz (3) ein Kernstück (3.5) aufweist und in diesem Kernstück (3.5) Bohrungen (3.7) für die Aufnahme elektrischer Leiter, z. B. Drähte eines Thermoelements oder Anschlussdrähte eines RTD, vorgesehen sind
und sich diese Bohrungen (3.7) von der Oberseite bis zum Boden des Kernstücks erstrecken,
wobei am Boden mindestens eine Öffnung vorhanden ist, die den Strom eines Spülgases durch die Bohrungen (3.7) und die Öffnung ermöglicht,
wobei das Kernstück (3.5) mindestens teilweise in einem Außenmantel (3.3) derart angeordnet ist, dass die Spülflüssigkeit aus dem Boden des Kernstücks (3.5) und der Außenseite des Kernstücks (3.5) in eine Auslaufkammer (3.10) des Messeinsatzes (3) strömen kann, **gekennzeichnet dadurch, dass**
die Auslaufkammer (3.10) des Messeinsatzes einen Hohlraum innerhalb des Messeinsatzes (3) darstellt, der durch Öffnungen in einem Rohr mit Bohrungen (3.2), das als Halterung für den Außenmantel (3.3) dient, mit der Außenseite des Messeinsatzes (3) kommuniziert.

2. Messeinsatz nach Anspruch 1,
wobei der Messeinsatz (3) mindestens eine Messstelle (3.4) an einem Ende des Kernstücks (3.5) aufweist und dieses Kernstück (3.5) im Außenmantel (3.3) angeordnet ist,
wobei der Außenmantel (3.3) teilweise im Rohr mit Bohrungen (32) angeordnet ist und dieses Rohr mit Bohrungen (3.2) an einer Klemmleiste (3.1) des Messeinsatzes (3) angeschlossen ist und
wobei Öffnungen, über die die Auslaufkammer (3.10) des Messeinsatzes mit der Außenseite des Messeinsatzes (3) kommuniziert, im Rohr mit Bohrungen (3.2) vorgesehen sind.

3. Anordnung, die einen Messeinsatz (3) nach einem der vorhergehenden Ansprüche, ein Schutzrohr (4.1), ein modulares Verbindungsstück (22, 2.3, 2.4) und einen Anschlusskopf (1.6) umfasst.

## Revendications

1. Élément de mesure (3), notamment pour la mesure de température, lequel élément de mesure (3) comporte un élément central (3.5), élément central (3.5) dans lequel sont réalisés des perçages (3.7) pour la réception de conducteurs électriques, p. ex. les thermo-éléments d'un thermocouple ou les fils de connexion d'un capteur de température à résistance, lesquels perçages (3.7) s'étendent de la partie supérieure jusqu'à la partie inférieure de l'élément central, au moins une ouverture étant située au fond, permettant à un gaz de purge de circuler à travers les perçages (3.7) et l'ouverture, l'élément central (3.5) étant disposé au moins partiellement dans une gaine extérieure (3.3) de telle manière que le fluide de purge soit capable de circuler depuis la partie inférieure de l'élément central (3.5) et l'extérieur de l'élément central (3.5) vers une chambre de sortie (3.10) de l'élément de mesure (3), **caractérisé en ce que** la chambre de sortie (3.10) de l'élément de mesure est un espace creux à l'intérieur de l'élément de mesure (3) qui communique avec l'extérieur de l'élément de mesure (3), par les ouvertures d'un tube percé (3.2) supportant la gaine extérieure (3.3).

2. Élément de mesure selon la revendication 1,
pour lequel au moins un point de mesure (3.4) de l'élément de mesure (3) est disposé à une extrémité de l'élément principal (3.5), lequel élément principal (3.5) est disposé dans la gaine extérieure (3.3),
pour lequel la gaine extérieure (3.3) est disposée partiellement dans le tube percé (3.2),
pour lequel le tube percé (3.2) est connecté à un bloc de raccordement (3.1) de l'élément de mesure (3) et
pour lequel des ouvertures par l'intermédiaire desquelles la chambre de sortie (3.10) de l'élément de mesure communique avec l'extérieur de l'élément de mesure (3) sont réalisées dans le tube percé (3.2).

3. Dispositif comprenant un élément de mesure (3) selon les revendications précédentes, un tube de protection (4.1), une pièce de raccordement modulaire (2.2, 2.3, 2.4) et une tête de sonde (1.6).
